# EUROPÄISCHE PATENTANMELDUNG

(11) **EP 4 156 435 A1**
(43) Veröffentlichungstag der Anmeldung: **29.03.2023**
(21) Anmeldenummer: 21199147.6
(22) Anmeldetag: 27.09.2021
(51) Int. Cl.: H02J 3/00, H02J 13/00

(54) **VERFAHREN ZUR STEUERUNG EINES ENERGIENETZES, AGENTENEINRICHTUNG, NETZSTEUERUNGSANORDNUNG UND SYSTEM**

(71) Anmelder: Siemens Aktiengesellschaft, 80333 München (DE)
(72) Erfinder: Romeis, Christian, 91052 Erlangen (DE)
(74) Vertreter: Siemens Patent Attorneys

(57) **Zusammenfassung**

Gegenstand der vorliegenden Erfindung ist ein Verfahren zur Steuerung eines Energienetzes, mit den Schritten:
Senden jeweils einer Angebotsnachricht (27) mittels mehrerer Agenteneinrichtungen (12,13,14), wobei jede Agenteneinrichtung (12,13,14) einem Teilnetz des Energienetzes zugeordnet ist, und wobei jede Angebotsnachricht (27) eine Teilnetz-spezifische Maßnahme zur Steuerung des jeweiligen Teilnetzes sowie eine Zeitpanne, für die die Teilnetz-spezifische Maßnahme angeboten wird, angibt, und
mittels einer Netzsteuerungsanordnung (2):
Empfangen der Angebotsnachrichten (27), und
Erkennen eines unerwünschten Netzzustands des Energienetzes, und
Auswählen einer Teilnetz-spezifischen Maßnahme aus den mehreren Teilnetz-spezifischen Maßnahmen, und
Senden einer Annahmenachricht (28) mittels der zentralen Netzsteuerungsanordnung an diejenige Agenteneinrichtung (13), die die Angebotsnachricht (27) mit der ausgewählten Teilnetz-spezifischen Maßnahme aussandte.

Ferner ist Gegenstand der vorliegenden Erfindung eine entsprechende Agenteneinrichtung und eine entsprechende Netzsteuerungsanordnung sowie ein System aus Agenteneinrichtung und Netzsteuerungsanordnung.

## Beschreibung

Die vorliegende Erfindung betrifft ein Verfahren zur Steuerung eines Energienetzes gemäß dem Oberbegriff des Anspruchs 1, eine Agenteneinrichtung gemäß dem Oberbegriff des Anspruchs 8, eine Netzsteuerungsanordnung gemäß dem Oberbegriff des Anspruchs 12 sowie ein System gemäß Anspruch 16.

Aus der Produktbroschüre "SIGUARD PDP - Grid Monitoring using Synchrophasors", Siemens AG 2021, ist eine Software für ein sog. "Wide Area Monitoring Protection and Control (WAMPAC)" bekannt. Dabei werden Zeigermessdaten für Strom und Spannung mittels sog. Phasor Measurement Units erfasst und ausgewertet, um zentral und in Echtzeit dynamische Veränderungen in einem Energienetz zu erkennen und beispielsweise Störungen wie z.B. eine von der Nennfrequenz stark abweichende Netzfrequenz vorherzusagen. Ferner können Schutzgeräte im Energienetz basierend auf den vorhergesagten Störungen optimiert werden, um Ausfälle zu vermeiden.

Aus der Produktbroschüre "SIGUARD DSA - Dynamic security assessment", Siemens AG 2020, ist eine Software für ein sog. "Dynamic security assessment" bekannt. Dabei wird ein Netzzustand aus einem Supervisory Data Aquisition and Control System (SCADA), d.h. einer Netzleitstelle, als Ausgangspunkt erfasst und im zukünftigen zeitlichen Verlauf simuliert. Dadurch können z.B. großräumige Störungen im Netzbetrieb anhand der Simulation vorab erkannt werden. Ferner können mögliche Gegenmaßnahmen in der Simulation getestet werden, bevor diese im realen Energienetz ausgelöst werden.

Aus der Produktbroschüre "GE Grid Solutions - Advanced Automation Applications", GE 2020, ist ein System mit Datenkonzentratoren bekannt, die Daten aus einem zugeordneten Teilnetz sammeln und zur Auswertung an einen zentralen Auswertungsserver übermitteln können. Der Auswertungsserver besitzt eine sog. "Wide Area Monitoring Protection and Control" (WAMPAC) Funktionalität, um die Netzstabilität überwachen zu können und ggf. Gegenmaßnahmen bei Störungen zu berechnen.

Derzeit sind WAMPAC Systeme basierend auf der beim jeweiligen Netzbetreiber installierten Hardware (Sensoren, Aktoren, Kommunikationsgeräte) und Software umgesetzt und kommunizieren direkt mit einem zentrale Auswertungsserver. Typischerweise müssen daher alle Geräte und die Aktoren wie z.B. flexible Erzeuger erneuerbarer elektrischer Energie (Photovoltaik, Windkraft) einem einzigen Betreiber des WAMAPC Systems gehören, um eine einheitliche zentrale Steuerung zu ermöglichen. Solche WAMPAC Systeme nutzen zwar standardisierte Protokolle wie z.B. IEC 60870-5-14, IEC 61850, usw., erfordern jedoch einen großen manuellen Einrichtungsaufwand. Nur so kann Interoperabilität sichergestellt werden, wenn viele unterschiedliche Geräte mit dem zentralen Auswertungsserver kommunizieren. Hieraus ergibt sich ein hoher manueller Aufwand, wenn das System verändert oder erweitert werden soll.

Insbesondere ist es problematisch, wenn über die vom Betreiber zur Verfügung gestellte Funktionalität (typischerweise sind die Methoden nach dem Standard IEC 61131 programmiert) hinaus neue Fähigkeiten im WAMPAC System hinzugefügt werden sollen. Dies kann z.B. eine kundenspezifische Berechnungsmethode sein, wie sie z.B. mittels der Mathematiksoftware "Simulink" bzw. ""Matlab" erstellt werden kann. Bisher werden solche neuen Berechnungsmethoden anhand aufwändiger Studien des Energienetzes, Lastflussrechnungen und Fehlerfällen vorkonfiguriert.

Ausgehend von bekannten software-implementierten Verfahren stellt sich an die Erfindung die Aufgabe, ein Verfahren zur Steuerung eines Energienetzes anzugeben, das auch bei Energienetzen mit komplexer Betreiberstruktur Störungen im Netzbetrieb erkennen und beheben kann.

Die Erfindung löst diese Aufgabe durch ein Verfahren nach Anspruch 1.

Ein Energienetz im Sinne der Erfindung ist z.B. ein elektrisches Energieverteilungs- oder versorgungsnetz, dass mehrere Teilnetze aufweist, die z.B. einzelne Regionen oder Städte versorgen. Es kann verschiedene Spannungsebenen aufweisen, z.B. eine Übertragungsebene mit Hochspannung über 52 kV Nennspannung, eine Mittelspannungsebene mit einer Nennspannung zwischen 1 kV und 52 kV sowie eine Niederspannungsebene mit einer Nennspannung unter 1 kV.

Der Begriff Steuerung bezeichnet das Ansteuern von steuerbaren Betriebsmitteln wie Schalteinrichtungen, gasisolierten Schalteinrichtungen, Stufenschaltern von Transformatoren, Netzreglern usw. mittels per Datenkommunikation übermittelter Steuerbefehle. Ferner kann z.B. auch das Ansteuern von Erzeugern elektrischer Energie oder Verbrauchern elektrischer Energie, um ihre jeweilige Einspeisung oder Entnahme von elektrischer Energie in das Energienetz zu steuern, umfasst sein.

Eine Angebotsnachricht und eine Annahmenachricht sowie ein Datentelegramm sind im Sinne der Erfindung z.B. digital codierte, d.h. aus Bitfolgen bestehende, Signalfolgen, die mittels Kommunikationseinrichtungen per Stromleitung (sog. Powerline-Communication), per Kupfer-Datenkabel (Ethernet, usw.) oder per Lichtwellenleiter gesendet und empfangen werden. Es können auch Funkverbindungen (W-LAN, long-rangeradio, 2G, 3G, 4G (LTE), 5G, usw.) genutzt werden.

Eine Agenteneinrichtung ist z.B. ein lokal im Teilnetz installiertes Gerät, das einen elektronischen Datenprozessor und eine Datenspeichereinrichtung wie einem Flashspeicher oder eine Solid-State-Disk aufweist. Auf dem Gerät ist z.B. eine Netzanalysesoftware installiert, die beispielsweise eine dem eingangs erwähnten SIGUARD PDP entsprechende Software als Mess- und Auswerte-Applikation nutzt. Eine Agenteneinrichtung kann jedoch auch als zentral in einer Cloud- oder auf einem Auswertungsserver installierte Softwarekomponente installiert sein, die Messdaten aus einem zugeordneten Teilnetz empfängt und auswertet.

Grundsätzlich ist es die Aufgabe der Agenteneinrichtung, für das zugeordnete Teilnetz eine Überwachung durchzuführen und z.B. zu ermitteln, welche Leistung als sog. spinning reserve zur Verfügung steht oder welche Leistung sehr schnell herauf oder herunter gefahren werden kann (Photovoltaikanlagen, Dieselgeneratoren, usw.).

Beispielsweise kann auch ermittelt werden, ob die für das Teilnetz aus dem Energienetz abgerufene Leistung bis auf null heruntergefahren werden kann, um das Teilnetz abzukoppeln und anschließend im Inselbetrieb weiter betreiben. Die Überwachung und Ermittlung dieser Daten kann z.B. regelmäßig aktualisiert werden, z.B. jede Minute oder alle 5 Stunden. Dabei kann beispielsweise berücksichtigt werden, für welches Zeitfenster die Teilnetz-spezifischen Maßnahmen angeboten werden. Es können in der Agenteneinrichtung unkompliziert kundenspezifische Berechnungsmethoden und Analyseverfahren implementiert werden.

Das Teilnetz kann beispielsweise ein Verteilnetz der Niederspannungsebene umfassen (unter 1 kV Nennspannung), das an ein übergeordnetes Mittelspannungsnetz (zw. 1 kV und 52 kV Nennspannung) angeschlossen ist. Die Agenteneinrichtung für das jeweilige Teilnetz kann z.B. der Mittelspannungsebene zugeordnet sein und beispielsweise in einer Ortsnetzstation angeordnet werden.

Beispielsweise kann die Funktionalität der Agenteneinrichtung als Software auf bereits im Energienetz vorhandenen Feldgeräten wie z.B. SICAM A8000, einer modularen Gerätereihe für Fernwirk- und Automatisierungsanwendungen, bekannt aus der Broschüre "SICAM A8000 Serie - Kompaktes, flexibles Fernwirk- und Automatisierungssystem", Siemens AG 2016, und/oder einem Schutzgerät aufbauen bzw. in diesen Geräten als Softwareanwendung installiert werden. Ferner kann die Software der Agenteneinrichtung in sog. "Intelligent Electronic Devices (IEDs)" implementiert werden.

Eine Teilnetz-spezifische Maßnahme zur Steuerung des jeweiligen Teilnetzes ist z.B. ein Lastabwurf für einen Verbraucher, eine Änderung einer Übersetzungsstufe eines Transformators oder eine Regelung der Einspeisung eines Windparks. Eine Zeitpanne, für die die Teilnetz-spezifische Maßnahme angeboten wird, ist z.B. eine vom aktuellen Zeitpunkt für einige Stunden in die Zukunft gerichtete Dauer; z.B. 5 Stunden. Ist die Zeitspanne um, verliert die angebotene Teilnetz-spezifische Maßnahme zur Steuerung des jeweiligen Teilnetzes z.B. automatisch ihre Gültigkeit. Beispielsweise kann eine Teilnetz-spezifische Maßnahme lauten, dass eine bestimmte Menge elektrischer Energieverbrauch (z.B. 2.3 MW) per Lastabwurf freigegeben bzw. nicht verbraucht werden. Das Angebot kann z.B. für 5 Stunden gelten. Entsprechend ist es z.B. sinnvoll, dass eine ausgewählte Teilnetz-spezifische Maßnahme innerhalb der Zeitspanne umgesetzt wird.

Ein unerwünschter Netzzustand des Energienetzes kann mittels der Netzsteuerungsanordnung beispielsweise mit einer Software erkannt werden, die in ihrer Funktionalität dem eingangs erwähnten SIGUARD DSA entspricht. Auf diese Weise kann eine Bewertung der empfangenen Maßnahmen für die Teilnetze vorgenommen werden, wobei das gesamte Energienetz simuliert wird. Zudem können damit auch eventuell nötige Gegenmaßnahmen zur Stabilisierung des Energienetzes und zur Vermeidung von Blackouts definiert werden. Anhand der Bewertung erfolgt eine Auswahl von Teilnetz-spezifischen Maßnahmen, die für das Energienetz umgesetzt werden sollen. Umsetzen bedeutet dabei z.B., dass Steuerbefehle an steuerbare Betriebsmittel usw. gesendet werden. Beispielsweise kann die o.g. Maßnahme ausgewählt werden, um 2.3 MW als Primäre Reserve oder Spinning Reserve einzusetzen. Der tatsächliche Lastabwurf kann z.B. durch die betreffende Agenteneinrichtung durchgeführt werden, so dass die Netzsteuerungsanordnung die Netztopologie des Teilnetzes oder die Lastbedingungen nicht komplett kennen muss.

Die Grundidee der Erfindung basiert darauf, dass eine zentrale WAMPAC Plattform als Netzsteuerungsanordnung die unterschiedlichen Bausteine der Weitbereichssteuerung von Energienetzen kombiniert. Die Plattform kann z.B. parallel zu einer Leitstelle betrieben werden und von dieser regelmäßig einen aktuellen Netzzustand und/oder eine Netzzustandsvorhersage erhalten. Dabei beinhaltet die WAMPAC Plattform Funktionalitäten, um als Broker für die Agenteneinrichtungen zu fungieren, z.B. Anwendungen zur Auswertung und Netzkontrolle sowie ein Netzmodell. Sie ist per Datenkommunikation mit Anwendungen verbunden, die Simulationen, Überwachungs- und Kontrollfunktionen und Gegenmaßnehmen bei Störungen zur Sicherstellung der Netzstabilität bereitstellen. Durch diese teilweise dezentralisierte Steuerung wird eine wesentliche Vereinfachung gegenüber bisherigen System erreicht und es wird außerdem vereinfacht, mittels der Agenteneinrichtungen auch steuerbare Betriebsmittel unterschiedlicher Hersteller in ein gemeinsames Kontrollregime einzubinden.

Mittels der Netzsteuerungsanordnung können die Vorgaben der Anwendungsregel VDE-AR-N 4142 umgesetzt werden. Die Anwendungsregel besagt, dass automatisiert sog. Letztmaßnahmen bei Störungen und Gefährdungen umgesetzt werden, wenn keine ausreichende Zeit für von einem Techniker der Leitstelle manuell ausgewählte Maßnahme zur Verfügung steht. Damit werden Vorgaben des europäischen "Network Codes on Emergency and Restoration (NC ER)" zum unterfrequenzabhängigen Lastabwurf wirksam in Deutschland implementiert. Mittels der Erfindung können Aufwände und Kosten für ein Nachrüsten der Feldgeräte und der Leitstelle für das Energienetz vermindert werden.

Die Plattform kommuniziert mittels Schnittstellen mit Agenteneinrichtungen oder Feldgeräten wie Remote Terminal Units (RTU), Schutzgeräten, Phasor Measurement Units (PMUs), um Messdaten wie Spannungswerte, Stromwerte und Zeigerinformationen zu empfangen. Es können von der Plattform auch Steuerbefehle an Feldgeräte gesendet werden, z.B. um Gegenmaßnahmen bei Netzstabilitätsproblemen im Teilnetz direkt umzusetzen. I.d.R. würden die Gegenmaßnahmen jedoch von der betreffenden Agenteneinrichtung umgesetzt.

Die Netzsteuerungsanordnung bzw. Plattform kann Standard-Anwendungssoftware wie das eingangs erwähnte Siguard PDP aufweisen, aber auch kundenspezifische Anwendungen wie z.B. Simulink-Anwendungen, Big-Data-Analytics-Software und/oder Power Quality Analysesoftware.

Die Plattform mit zentraler Intelligenz ermöglicht es im Gegensatz zu bisherigen Systemen, verschiedene Lösungen, die von unterschiedlichen Herstellern und/oder Betreibern im Feld eingesetzt werden, zu kombinieren. Beispielsweise können mittels der Agenteneinrichtungen unterschiedliche Betreiber von Microgrids oder Virtuellen Kraftwerken in das WAMPAC System eingebunden werden. Dafür ist es lediglich erforderlich, dass der Betreiber für seinen Verantwortungsbereich eine dezentrale Agenteneinrichtung in Software und/oder Hardware einrichtet, um z.B. Messdaten, Lastbedingungen, Aktive Leistungsreserven, Spinning Reserven, Lastabwurfpläne und auch mögliche Gegenmaßnahmen bei Stabilitätsproblemen im Energienetz mitzuteilen. Es können außerdem Messdaten und Aktoren in das WAMPAC System eingebunden werden.

Basierend auf all diesen Informationen und den von den Agenteneinrichtungen angebotenen Teilnetz-spezifischen Maßnahmen kann die zentrale Intelligenz Simulationen des Verhaltens des Energienetzes durchführen, wobei die Art der Simulationen auf die Art der aktivierten Anwendungsprogramme (z.B. Spannungsbandkontrolle) abgestimmt ist und z.B. Gegenmaßnahmen wie einen Lastabwurf beinhaltet.

Die WAMPAC Platform wird dabei ständig aktualisiert, indem überprüft wird, welche Geräte wie z.B. Sensoren, Aktoren und Agenteneinrichtungen eingebucht sind und am System teilnehmen. Daher ist dem System bekannt, wenn Geräte ausgefallen oder zur Wartung abgeschaltet sein sollten.

Zusammenfassend ist festzustellen, dass die Kombination verschiedener Anbieter durch die Nutzung flexibler Adapter - der Agenteneinrichtungen - eine teilweise dezentrale und damit robustere Steuerung von Energienetzen bereitstellen kann. Der Betreiber des WAMPAC Systems muss nicht alle Details jedes Teilnetzes kennen und überwachen, sondern kann dieses Management der zuständigen Agenteneinrichtung überlassen.

In einer bevorzugten Ausführungsform des erfindungsgemäßen Verfahrens wird die ausgewählte Teilnetz-spezifische Maßnahme von der dem Teilnetz zugeordneten Agenteneinrichtung umgesetzt. Dies ist ein Vorteil, weil die Netzsteuerungsanordnung in dieser Variante die im Teilnetz vorhandenen steuerbaren Betriebsmittel nicht selbst kennen und verwalten muss, sondern dies dezentral durch die Agenteneinrichtung erfolgen kann.

In einer weiteren bevorzugten Ausführungsform des erfindungsgemäßen Verfahrens wird die ausgewählte Teilnetz-spezifische Maßnahme von der Netzsteuerungsanordnung für das zugeordnete Teilnetz umgesetzt. Dies ist ein Vorteil, weil die Maßnahme direkt und unmittelbar umgesetzt werden kann.

In einer weiteren bevorzugten Ausführungsform des erfindungsgemäßen Verfahrens werden mittels der Netzsteuerungsanordnung alle empfangenen Teilnetz-spezifischen Maßnahmen derart priorisiert, das Teilnetz-spezifische Maßnahmen, die einen großen Einfluss auf eine Behebung des unerwünschten Netzzustands haben, bevorzugt ausgewählt werden. Dies ist ein Vorteil, weil auf diese Weise schnell und unkompliziert Gegenmaßnahmen bei Problemen der Netzstabilität ausgewählt und umgesetzt werden können.

In einer weiteren bevorzugten Ausführungsform des erfindungsgemäßen Verfahrens wird mittels der Netzsteuerungsanordnung die Auswahl aus allen empfangenen Teilnetz-spezifischen Maßnahmen derart durgeführt, dass eine Untergruppe von Teilnetz-spezifischen Maßnahmen, die einen erwarteten Einfluss auf eine Behebung des unerwünschten Netzzustands haben, zusammengestellt wird, und nach dem Zufallsprinzip eine Teilnetz-spezifische Maßnahme aus der Untergruppe ausgewählt wird. Diese Variante hat den Vorteil, dass automatisch nach dem Zufallsprinzip eine Diskrimierungsfreiheit für die Teilnetze bzw. deren Betreiber-Unternehmen umgesetzt wird. Es ist nämlich in einigen Ländern wie z.B. Deutschland rechtlich gefordert, keine Anbieter zu bevorzugen.

In einer weiteren bevorzugten Ausführungsform des erfindungsgemäßen Verfahrens werden mittels der Agenteneinrichtungen mehrere Teilnetz-spezifische Maßnahmen mit überlappenden Zeitspannen mit mindestens einer Angebotsnachricht übermittelt, wobei für jede Teilnetz-spezifische Maßnahme eine Kennzeichnung über eine erwartete Auswirkung der Teilnetz-spezifischen Maßnahme auf das Energienetz hinzugefügt ist. Überlappende Zeitspannen bedeutet, dass die mehreren Maßnahmen zumindest für einen gewissen Zeitraum alle angeboten bzw. gültig sind, so dass sie in einer konkreten Störungssituation von der Netzsteuerungsanordnung tatsächlich als Alternativen zur Problemlösung geprüft werden können. Dies ist ein Vorteil, weil z.B. eine erste Teilnetz-spezifische Maßnahme, die die Agenteneinrichtung für das unterlagerte Teilnetz anbieten kann, besonders zur Frequenzstabilisierung (und daher mit einer ersten Kennzeichnung versehen) geeignet ist, während eine zweite Teilnetz-spezifische Maßnahme besonders zur Blindleistungskompensation (und daher mit einer zweiten Kennzeichnung versehen) geeignet ist. Diese Vorverarbeitung erleichtert für die Netzsteuerungsanordnung je nach Netzzustand die Auswahl von Maßnahmen. Es können einheitliche Kennzeichnungen verwendet werden, so dass seitens der Netzsteuerungsanordnung die eingehenden Maßnahmen sinnvoll geclustert werden können, nämlich anhand der Kennzeichnung nach Anwendungsfall und/oder anhand der Zuordnung der Agenteneinrichtung zu einem Teilnetz geographisch bzw. topologisch.

In einer weiteren bevorzugten Ausführungsform des erfindungsgemäßen Verfahrens werden mittels der Agenteneinrichtungen jeweils mit einem Datentelegramm Teilnetz-spezifische Messdaten und/oder Topologieinformationen und/oder Photovoltaik-Leistungsdaten und/oder Leistungsdaten thermischer Generatoren an die Netzsteuerungsanordnung gesendet. Dies ist ein Vorteil, weil auf diese Weise die Netzsteuerungsanordnung befähigt wird, eigenständig Berechnungen zum Netzzustand des gesamten Energienetzes durchzuführen. Bevorzugt wird ein sog. dynamisches Äquivalent, also ein aggregiertes bzw. vereinfachtes mathematisches Modell des der jeweiligen Agenteneinrichtung zugeordneten Teilnetzes an die Netzsteuerungsanordnung übermittelt.

Ausgehend von bekannten Feldgeräten stellt sich ferner an die Erfindung die Aufgabe, eine Agenteneinrichtung zur Steuerung eines Energienetzes anzugeben, mittels derer auch bei Energienetzen mit komplexer Betreiberstruktur Störungen im Netzbetrieb erkannt und behoben werden können.

Die Erfindung löst diese Aufgabe durch eine Agenteneinrichtung nach Anspruch 8. Bevorzugte Ausführungsformen sind in den abhängigen Ansprüche 9 bis 11 angegeben. Es ergeben sich für die erfindungsgemäße Agenteneinrichtung und ihre Ausführungsformen sinngemäß die gleichen Vorteile wie eingangs für das erfindungsgemäße Verfahren erläutert.

Ausgehend von bekannten Leitstelleneinrichtungen stellt sich ferner an die Erfindung die Aufgabe, eine Netzsteuerungsanordnung zur Steuerung eines Energienetzes anzugeben, mittels derer auch bei Energienetzen mit komplexer Betreiberstruktur Störungen im Netzbetrieb erkannt und behoben werden können.

Die Erfindung löst diese Aufgabe durch eine Agenteneinrichtung nach Anspruch 12. Bevorzugte Ausführungsformen sind in den abhängigen Ansprüche 13 bis 15 angegeben. Es ergeben sich für die erfindungsgemäße Netzsteuerungsanordnung und ihre Ausführungsformen sinngemäß die gleichen Vorteile wie eingangs für das erfindungsgemäße Verfahren erläutert.

Ausgehend von bekannten Systemen zur Steuerung von Energienetzen stellt sich ferner an die Erfindung die Aufgabe, ein System zur Steuerung eines Energienetzes anzugeben, mit dem auch bei Energienetzen mit komplexer Betreiberstruktur Störungen im Netzbetrieb erkannt und behoben werden können.

Die Erfindung löst diese Aufgabe durch ein System nach Anspruch 16, wobei sich sinngemäß die gleichen Vorteile wie eingangs für das erfindungsgemäße Verfahren erläutert ergeben.

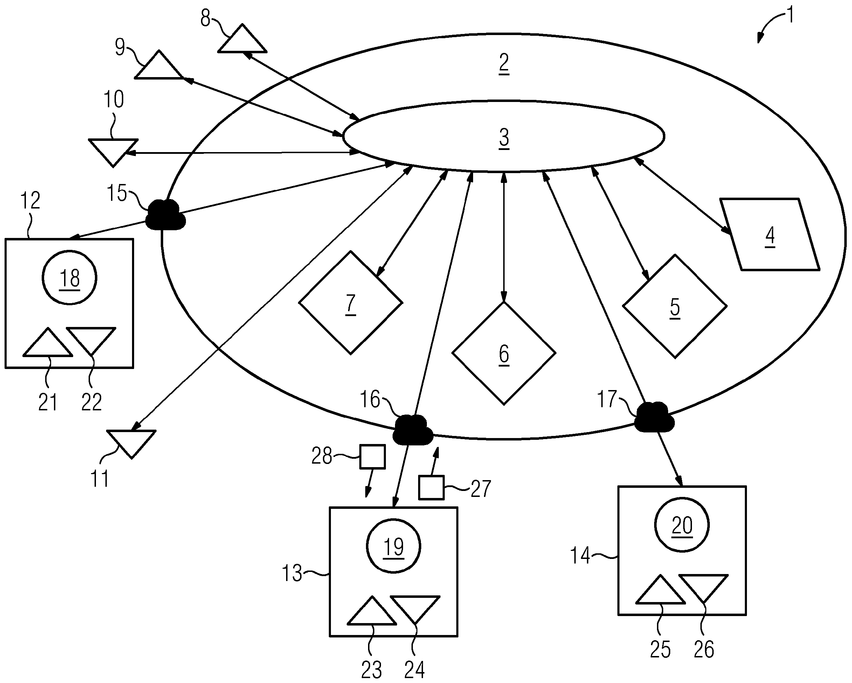

Zur besseren Erläuterung der Erfindung zeigt die Figur ein bevorzugtes Ausführungsbeispiel der Erfindung.

Ein System 1 zur Steuerung eines Energienetzes weist eine zentrale Netzsteuerungsanordnung 2 mit eine Steuereinrichtung 3 auf, die Datenprozessorressourcen und Datenspeicherressourcen (nicht dargestellt) aufweist. Die Netzsteuerungsanordnung 2 weist zudem drei Softwareapplikationen 5,6,7 auf, wobei die Softwareapplikationen 5 z.B. die Einhaltung vorgegebener Spannungsgrenzen überwacht und die Softwareapplikation 6 transiente Stabilität überwacht und die Softwareapplikation 7 z.B. zur Simulation des Netzzustands dient. Ferner ist eine Modelleinrichtung 4 vorgesehen, um ein Netzmodell bereitzustellen. Für eine Kommunikation mit den Agenteneinrichtungen sind Schnittstellen 15,16,17 mit zweiten Kommunikationseinrichtungen vorgesehen, um Angebotsnachrichten 27 empfangen und Annahmenachrichten 28 senden zu können.
Die Netzsteuerungsanordnung 2 kann direkt aus den Teilnetzen Messwerte von Messeinrichtungen 8,9 wie z.B. remote terminal units, phasor measurement units oder intelligent electronic devices empfangen. Außerdem können auch direkt Steuerbefehle an Aktoren 10 wie z.B. Schaltanlagen, Hochspannungsgleichstromübertragungsanlagen (HVDC) oder Statische Blindleistungskompensatoren (SVC) gesendet werden.

Es sind drei Agenteneinrichtungen 12,13,14 für jeweils ein zugeordnetes Teilnetz gezeigt, die per Datenkommunikation (angedeutet durch bidirektionale Pfeile) mit der Rechnereinrichtung digitale Nachrichten austauschen können. Jede Agenteneinrichtung weist eine Teilnetzsteuerungseinrichtung 18,19,20 auf, die ausgebildet ist, eine Teilnetz-spezifische Maßnahme zur Steuerung des Teilnetzes sowie eine Zeitpanne, für die die Teilnetz-spezifische Maßnahme angeboten wird, zu ermitteln. Ferner ist jeweils eine erste Kommunikationseinrichtung (nicht dargestellt) vorgesehen, die ausgebildet ist, eine Angebotsnachricht 27 mit der Teilnetz-spezifischen Maßnahme und der Zeitspanne zu senden oder eine Annahmenachricht 28 für die Teilnetz-spezifischen Maßnahme zu empfangen. Die Teilnetzsteuerungseinrichtung ist ausgebildet, die Teilnetz-spezifische Maßnahme für das Teilnetz umzusetzen. Hierfür sendet sie Steuerbefehle an steuerbare Betriebsmittel, Erzeuger und Verbraucher elektrischer Energie aus.

Die Agenteneinrichtungen 12,13,14 sind z.B. einer Einrichtung in einer Ortsnetzstation oder einer Steuereinrichtung für ein virtuelles Kraftwerk (Virtual Power Plant, VPP) zugeordnet.

Die Teilnetzsteuerungseinrichtungen 12,13,14 sind ausgebildet, Teilnetz-spezifische Messdaten und/oder Topologieinformationen und/oder Photovoltaik-Leistungsdaten und/oder Leistungsdaten thermischer Generatoren zu erheben, und mittels der ersten Kommunikationseinrichtung mit einem Datentelegramm zu senden.

Ferner können die Agenteneinrichtungen 12,13,14 Messwerte 21,23,25 von Messeinrichtungen aus dem jeweiligen Teilnetz verarbeiten. Dabei handelt es sich z.B. um remote terminal units, phasor measurement units oder intelligent electronic devices. Außerdem können auch direkt Steuerbefehle an Aktoren 21,24,26 wie z.B. Schaltanlagen, Hochspannungsgleichstrom-übertragungsanlagen (HVDC) oder Statische Blindleistungskompensatoren (SVC) gesendet werden.

## Patentansprüche

1. Verfahren zur Steuerung eines Energienetzes, mit den Schritten:
Senden jeweils einer Angebotsnachricht (27) mittels mehrerer Agenteneinrichtungen (12,13,14), wobei jede Agenteneinrichtung (12,13,14) jeweils einem Teilnetz des Energienetzes zugeordnet ist, und wobei jede Angebotsnachricht (27) eine Teilnetz-spezifische Maßnahme zur Steuerung des jeweiligen Teilnetzes sowie eine Zeitpanne, für die die Teilnetz-spezifische Maßnahme angeboten wird, angibt, und
mittels einer Netzsteuerungsanordnung (2):
Empfangen der Angebotsnachrichten (27), und
Erkennen eines unerwünschten Netzzustands des Energienetzes, und
Auswählen einer Teilnetz-spezifischen Maßnahme aus den mehreren Teilnetz-spezifischen Maßnahmen, und
Senden einer Annahmenachricht (28) mittels der zentralen Netzsteuerungsanordnung an diejenige Agenteneinrichtung (13), die die Angebotsnachricht (27) mit der ausgewählten Teilnetz-spezifischen Maßnahme aussandte.

2. Verfahren nach Anspruch 1, **dadurch gekennzeichnet, dass** die ausgewählte Teilnetz-spezifische Maßnahme von der dem Teilnetz zugeordneten Agenteneinrichtung (13) umgesetzt wird.

3. Verfahren nach Anspruch 1 oder 2, **dadurch gekennzeichnet, dass** die ausgewählte Teilnetz-spezifische Maßnahme von Netzsteuerungsanordnung (2) für das zugeordnete Teilnetz umgesetzt wird.

4. Verfahren nach einem der vorhergehenden Ansprüche, **dadurch gekennzeichnet, dass**
mittels der Netzsteuerungsanordnung (2) alle empfangenen Teilnetz-spezifischen Maßnahmen derart priorisiert werden, das Teilnetz-spezifischen Maßnahmen, die einen großen Einfluss auf eine Behebung des unerwünschten Netzzustands haben, bevorzugt ausgewählt werden.

5. Verfahren nach einem der vorhergehenden Ansprüche, **dadurch gekennzeichnet, dass**
mittels der Netzsteuerungsanordnung (2) die Auswahl aus allen empfangenen Teilnetz-spezifischen Maßnahmen derart durgeführt wird, dass eine Untergruppe von Teilnetz-spezifischen Maßnahmen, die einen erwarteten Einfluss auf eine Behebung des unerwünschten Netzzustands haben, zusammengestellt wird, und nach dem Zufallsprinzip eine Teilnetz-spezifische Maßnahme aus der Untergruppe ausgewählt wird.

6. Verfahren nach einem der vorhergehenden Ansprüche, **dadurch gekennzeichnet, dass**
mittels der Agenteneinrichtungen (12,13,14) mehrere Teilnetz-spezifische Maßnahmen mit überlappenden Zeitspannen mit mindestens einer Angebotsnachricht (27) übermittelt werden, wobei für jede Teilnetz-spezifische Maßnahme eine Kennzeichnung über eine erwartete Auswirkung der Teilnetz-spezifischen Maßnahme auf das Energienetz hinzugefügt ist.

7. Verfahren nach einem der vorhergehenden Ansprüche, **dadurch gekennzeichnet, dass**
mittels der Agenteneinrichtungen (12,13,14) jeweils mit einem Datentelegramm Teilnetz-spezifische Messdaten und/oder Topologieinformationen und/oder Photovoltaik-Leistungsdaten und/oder Leistungsdaten thermischer Generatoren an die Netzsteuerungsanordnung gesendet werden.

8. Agenteneinrichtung (12,13,14) für ein Teilnetz eines Energienetzes, aufweisend:
eine Teilnetzsteuerungseinrichtung (18,19,20), die ausgebildet ist, eine Teilnetz-spezifische Maßnahme zur Steuerung des Teilnetzes sowie eine Zeitpanne, für die die Teilnetz-spezifische Maßnahme angeboten wird, zu ermitteln, und
eine erste Kommunikationseinrichtung, die ausgebildet ist,
eine Angebotsnachricht (27) mit der Teilnetz-spezifischen Maßnahme und der Zeitspanne zu senden.

9. Agenteneinrichtung (12,13,14) nach Anspruch 8, **dadurch gekennzeichnet, dass**
die erste Kommunikationseinrichtung ausgebildet ist, eine Annahmenachricht (28) für die Teilnetz-spezifische Maßnahme zu empfangen, und dass
die Teilnetzsteuerungseinrichtung (19) ausgebildet ist, die Teilnetz-spezifischen Maßnahme für das Teilnetz umzusetzen.

10. Agenteneinrichtung (12,13,14) nach Anspruch 8 oder 9, **dadurch gekennzeichnet, dass**
die Teilnetzsteuerungseinrichtung (18,19,20) ausgebildet ist, mehrere Teilnetz-spezifische Maßnahmen mit überlappenden Zeitspannen zu ermitteln, wobei für jede Teilnetz-spezifische Maßnahme eine Kennzeichnung über eine erwartete Auswirkung der Teilnetz-spezifischen Maßnahme auf das Energienetz hinzugefügt ist, und dass
die erste Kommunikationseinrichtung ausgebildet ist, die mehreren Teilnetz-spezifischen Maßnahmen mit überlappenden Zeitspannen mit mindestens einer Angebotsnachricht (27) zu senden.

11. Agenteneinrichtung (12,13,14) nach einem der Ansprüche 8 bis 10, **dadurch gekennzeichnet, dass**
die Teilnetzsteuerungseinrichtung (18,19,20) ausgebildet ist, Teilnetz-spezifische Messdaten (21,23,25) und/oder Topologieinformationen und/oder Photovoltaik-Leistungsdaten und/oder Leistungsdaten thermischer Generatoren zu erheben, und dass
die erste Kommunikationseinrichtung ausgebildet ist, die Teilnetz-spezifischen Messdaten und/oder Topologieinformationen und/oder Photovoltaik-Leistungsdaten und/oder Leistungsdaten thermischer Generatoren mit einem Datentelegramm zu senden.

12. Netzsteuerungsanordnung (2) für ein Energienetz mit mehreren Teilnetzen, aufweisend:
eine zweite Kommunikationseinrichtung zum Empfangen von Angebotsnachrichten (27) und zum Senden einer Annahmenachricht (28) an diejenige Agenteneinrichtung, die die Angebotsnachricht (27) mit einer ausgewählten Teilnetz-spezifischen Maßnahme aussandte, und
eine Steuereinrichtung (3), die ausgebildet ist, aus den mehreren Teilnetz-spezifischen Maßnahmen eine Teilnetz-spezifischen Maßnahme auszuwählen.

13. Netzsteuerungsanordnung (2) nach Anspruch 12, **dadurch gekennzeichnet, dass**
die Steuereinrichtung (3) ausgebildet ist, die ausgewählte Teilnetz-spezifische Maßnahme umzusetzen.

14. Netzsteuerungsanordnung (2) nach Anspruch 12 oder 13, **dadurch gekennzeichnet, dass**
die Steuereinrichtung (3) ausgebildet ist, alle empfangenen Teilnetz-spezifischen Maßnahmen derart zu priorisieren, dass Teilnetz-spezifische Maßnahmen, die einen großen Einfluss auf eine Behebung des unerwünschten Netzzustands haben, bevorzugt ausgewählt werden.

15. Netzsteuerungsanordnung (2) nach einem der Ansprüche 12 bis 14, **dadurch gekennzeichnet, dass**
die Steuereinrichtung (3) ausgebildet ist, die Auswahl aus allen empfangenen Teilnetz-spezifischen Maßnahmen derart durchzuführen, dass eine Untergruppe von Teilnetz-spezifischen Maßnahmen, die einen erwarteten Einfluss auf eine Behebung des unerwünschten Netzzustands haben, zusammengestellt wird, und nach dem Zufallsprinzip eine Teilnetz-spezifische Maßnahme aus der Untergruppe ausgewählt wird.

16. System, aufweisend:
eine Agenteneinrichtung (12,13,14) nach einem der Ansprüche 8 bis 11, und
eine Netzsteuerungsanordnung (2) nach einem der Ansprüche 12 bis 15.
